# DEMANDE DE BREVET EUROPEEN

(11) **EP 3 757 842 A1**
(43) Date de publication de la demande: **30.12.2020**
(21) Numéro de dépôt: 20182130.3
(22) Date de dépôt: 25.06.2020
(51) Int. Cl.: G06F 21/57, G06F 21/12, G06F 8/51, G06F 8/65, G06F 8/72, G06F 21/60, G06F 21/64, G06F 21/72, G06F 21/74, G06F 21/78, H04L 9/08, H04L 9/32

(54) **MODIFICATION D'UNE MÉMOIRE D'UN MICROPROCESSEUR SÉCURISÉ**

(30) Priorité: 28.06.2019 FR 1907125
(71) Demandeur: STMicroelectronics (Rousset) SAS, 13790 Rousset (FR); STMicroelectronics (Grand Ouest) SAS, 72100 Le Mans (FR)
(72) Inventeur: ORLANDO, William, 13790 PEYNIER (FR); COUVRAND, Julien, 72000 LE MANS (FR); GUILLEMIN, Pierre, 13002 MARSEILLE (FR)
(74) Mandataire: Cabinet Beaumont

(57) **Abrégé**

La présente description concerne un procédé comprenant des étapes consistant à :
a) recevoir, par un premier microprocesseur (3), une requête de modification d'un contenu d'une première mémoire (32) du premier microprocesseur ;
b) accéder, avec le premier microprocesseur, à des premières données associées à la requête et à une signature générée à partir des premières données, les premières données et la signature étant disponibles dans une deuxième mémoire (22) d'un deuxième microprocesseur (2), et les premières données étant représentatives d'une modification à appliquer au contenu de la première mémoire (32) ;
c) vérifier, par le premier microprocesseur (3), l'authenticité des premières données à partir de ladite signature ; et
d) modifier le contenu de la première mémoire (32) conformément aux premières données, la mise en oeuvre de l'étape d) étant conditionnée par l'étape c).

## Description

### Domaine technique

La présente description concerne de façon générale les systèmes électroniques, et plus particulièrement les systèmes électroniques comprenant plusieurs microprocesseurs.

### Technique antérieure

On connaît des systèmes électroniques comprenant plusieurs microprocesseurs. Parmi ces systèmes, on s'intéresse plus particulièrement ici au cas de systèmes comprenant au moins un microprocesseur se comportant, pour les autres microprocesseurs du système, comme une boîte noire. Un tel microprocesseur met en oeuvre un jeu de fonctions ou services, généralement critiques pour la sécurité du système, par exemple des services de chiffrement/déchiffrement aussi appelés services de cryptographie. Ce jeu de services est mis à disposition des autres microprocesseurs du système, ou, autrement dit, est exposé aux autres microprocesseurs du système.

Les codes logiciels des services exposés par le microprocesseur se comportant en boîte noire sont stockés dans une mémoire non volatile, c'est-à-dire une mémoire qui ne s'efface pas quand elle n'est plus alimentée, dont le contenu est figé lors de la fabrication ou de la première programmation de la mémoire. Autrement dit, le contenu de la mémoire stockant les codes logiciels des services ne peut pas être modifié.

Ainsi, pour modifier un jeu de services exposés par un tel microprocesseur, notamment suite à la découverte d'un dysfonctionnement d'un des services exposés ou suite à la demande d'un client utilisant le microprocesseur, il faut prévoir une nouvelle mémoire non volatile stockant les codes logiciels du jeu de services modifié. Un microprocesseur étant le plus souvent réalisé sous la forme d'un unique circuit intégré, cela revient, en pratique, à prévoir un nouveau microprocesseur comprenant la nouvelle mémoire non volatile. Le temps, les ressources humaines et/ou matérielles et le coût nécessaires à la conception et à la fabrication de ce nouveau microprocesseur peuvent être importants, ce qui pose problème.

### Résumé de l'invention

Il existe un besoin de pallier tout ou partie des inconvénients des systèmes comprenant plusieurs microprocesseurs, notamment des systèmes comprenant un microprocesseur exposant un jeu de services stockés sur une mémoire non volatile du microprocesseur, dont le contenu est figé.

Un mode de réalisation pallie tout ou partie des inconvénients des systèmes connus comprenant plusieurs microprocesseurs, notamment des systèmes connus comprenant un microprocesseur exposant un jeu de services stockés sur une mémoire non volatile du microprocesseur, dont le contenu est figé.

Un mode de réalisation prévoit un procédé comprenant des étapes consistant à :
a) recevoir, par un premier microprocesseur, une requête de modification d'un contenu d'une première mémoire du premier microprocesseur, accessible par le premier microprocesseur uniquement ;
b) accéder, avec le premier microprocesseur, à des premières données associées à la requête et à une signature générée à partir des premières données et d'un algorithme de chiffrement asymétrique, les premières données et la signature étant disponibles dans une deuxième mémoire d'un deuxième microprocesseur, et les premières données étant représentatives d'une modification à appliquer au contenu de la première mémoire, ladite modification étant représentative d'une modification d'un jeu de services exposés par le premier microprocesseur ;
c) vérifier, par le premier microprocesseur, l'authenticité des premières données à partir de ladite signature ; et
d) modifier le contenu de la première mémoire conformément aux premières données, la mise en oeuvre de l'étape d) étant conditionnée par l'étape c).

Selon un mode de réalisation :
- une première table d'indirection est stockée dans la première mémoire, la première table comprenant un ou plusieurs premiers index dont chacun pointe vers un service exposé différent ou vers un service non supporté ;
- les premières données comprennent des deuxièmes données représentatives au moins d'un index cible et d'un paramètre dont une valeur est sélectionnée parmi au moins une première valeur et une deuxième valeur ; et l'étape d) comprend :
- lorsque ledit paramètre est à la première valeur, une étape de modification de la première table pour faire pointer le premier index égal à l'index cible vers un service non supporté ; ou
- lorsque ledit paramètre est à la deuxième valeur, une étape de modification de la première table pour faire pointer le premier index égal à l'index cible vers un autre service encore non exposé.

Selon un mode de réalisation, la valeur du paramètre est sélectionnée parmi au moins la première valeur, la deuxième valeur et une troisième valeur, l'étape d) comprenant, lorsque le paramètre est à la troisième valeur, une étape consistant à enregistrer un code logiciel d'un nouveau service dans la première mémoire, et une étape de modification de la première table pour faire pointer le premier index égal à l'index cible vers le nouveau service.

Selon un mode de réalisation :
- une deuxième table d'indirection est stockée dans la première mémoire, la deuxième table comprenant un ou plusieurs deuxièmes index dont chacun pointe vers une zone de la première mémoire contenant ou non une mise à jour d'un des services exposés ; et
- la valeur du paramètre est sélectionnée parmi au moins la première valeur, la deuxième valeur et une quatrième valeur, l'étape d) comprenant, lorsque le paramètre est à la quatrième valeur, une étape consistant à supprimer la mise à jour contenue par la zone de la première mémoire pointée par le deuxième index égal à l'index cible.

Selon un mode de réalisation, la valeur du paramètre est sélectionnée parmi au moins la première valeur, la deuxième valeur, la quatrième valeur et une cinquième valeur, l'étape d) comprenant, lorsque le paramètre est à la cinquième valeur, une étape consistant à enregistrer, dans la zone de la première mémoire pointée par le deuxième index égal à l'index cible, un code logiciel d'une mise à jour d'un des services exposés.

Selon un mode de réalisation, les premières données comprennent des troisièmes données représentatives du code logiciel enregistré, à l'étape d), dans la première mémoire.

Selon un mode de réalisation, les deuxièmes données sont des données chiffrées par un algorithme de chiffrement symétrique, l'étape d) comprenant une étape d1) de déchiffrement des deuxièmes données par le premier microprocesseur.

Selon un mode de réalisation, les troisièmes données sont des données chiffrées par un autre algorithme de chiffrement symétrique, l'étape d) comprenant, après l'étape d1), une étape d2) de déchiffrement des troisièmes données par le premier microprocesseur.

Selon un mode de réalisation, les deuxièmes données sont en outre représentatives d'un premier code d'intégrité généré lors du chiffrement des troisièmes données, l'étape d2) comprenant en outre la comparaison du premier code d'intégrité à un deuxième code d'intégrité généré lors du déchiffrement des troisièmes données, la modification du contenu de la première mémoire conformément aux premières données étant conditionnée par ladite comparaison.

Selon un mode de réalisation, le jeu de services exposés initialement par le premier microprocesseur est déterminé par le contenu d'une troisième mémoire non volatile du premier microprocesseur, de préférence une mémoire ROM, le contenu de la troisième mémoire étant figé et accessible par le premier microprocesseur uniquement.

Selon un mode de réalisation, le service encore non exposé est déterminé par le contenu de la troisième mémoire.

Selon un mode de réalisation, les données de mise à jour comprennent en outre des quatrièmes données non chiffrées indiquant :
- l'algorithme de chiffrement asymétrique utilisé ; et/ou
- un vecteur d'initialisation du chiffrement symétrique ; et/ou
- une taille des premières données ; et/ou
- une version de la troisième mémoire et de son contenu.

Selon un mode de réalisation, la première mémoire est une mémoire volatile, de préférence une mémoire RAM.

Un autre mode de réalisation prévoit un microprocesseur comprenant un processeur et une mémoire non volatile dont le contenu est figé, la mémoire non volatile comprenant des instructions qui, lorsqu'elles sont lues par le processeur, entraînent la mise en oeuvre d'un procédé tel que défini ci-dessus.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de manière très schématique et sous la forme de blocs, un exemple de mode de réalisation d'un système électronique du type auquel s'appliquent les modes de réalisation décrits de modification d'une mémoire ;
la figure 2 représente, de manière schématique, un exemple de mode de réalisation de données utilisées dans le système de la figure 1, pour demander une mise en oeuvre d'un service exposé par un microprocesseur du système de la figure 1 ;
la figure 3 représente, de manière schématique, un mode de réalisation de données utilisées dans le système de la figure 1, pour mettre en oeuvre une modification d'une mémoire d'un microprocesseur du système ;
la figure 4 représente, de manière schématique et sous la forme de blocs, un mode de réalisation d'un procédé de mise à jour d'une mémoire d'un microprocesseur du système de la figure 1 ;
la figure 5 représente, de manière plus détaillée et sous la forme de blocs, le procédé de la figure 4 ;
la figure 6 représente, de manière schématique, une variante de réalisation des données de la figure 3 ;
la figure 7 représente, sous la forme de blocs, une variante de réalisation du procédé de la figure 5 ;
la figure 8 représente, sous la forme de blocs, encore une autre variante de réalisation du procédé des figures 5 et 7 ; et
la figure 9 représente trois vues schématiques A, B et C illustrant un mode de réalisation d'un procédé de gestion d'un espace de stockage dans une mémoire d'un microprocesseur du système de la figure 1, lors de mises en oeuvre du procédé de la figure 5, 7 ou 8.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les dispositifs dans lesquels sont prévus des systèmes à plusieurs microprocesseurs dont l'un se comporte en boîte noire et expose un jeu de services, n'ont pas été détaillés, les modes de réalisation décrits étant compatibles avec ces dispositifs usuels. En outre, les services que peut exposer un tel microprocesseur se comportant en boîte noire, à d'autres microprocesseurs, n'ont pas été détaillés, les modes de réalisation décrits étant compatibles avec les services usuels exposés par un tel microprocesseur.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

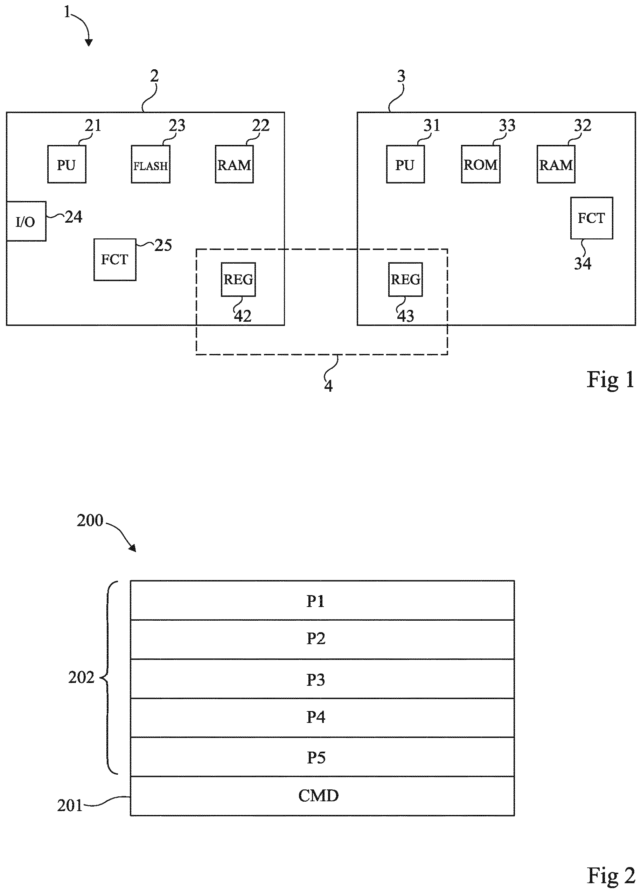

La figure 1 représente, de manière très schématique et sous la forme de blocs, un exemple de mode de réalisation d'un système électronique 1 du type auquel s'appliquent les modes de réalisation décrits de modification d'une mémoire d'un microprocesseur du système.

Le système électronique 1 comprend plusieurs microprocesseurs, deux microprocesseurs 2 et 3 dans cet exemple. Le microprocesseur 3 se comporte comme une boîte noire. Dit autrement, le microprocesseur 3 met à disposition un jeu de services ou de fonctions pour les autres microprocesseurs du système sans que ces derniers ne puissent accéder au contenu du microprocesseur 3. Plus particulièrement, les autres microprocesseurs du système 1 ne peuvent pas accéder aux codes logiciels ou au matériel mettant en oeuvre les services exposés par le microprocesseur 3, ni aux données utilisées et/ou générées en interne du microprocesseur 3 pour la mise en oeuvre de ces services.

Dans ce mode de réalisation, le microprocesseur 3 est un microprocesseur sécurisé, ou, dit autrement, une boîte noire transactionnelle, BNT (en anglais "Hardware Secure Module", HSM).

Par microprocesseur, on entend ici un dispositif électronique comprenant, dans un même circuit intégré, une unité centrale de traitement et au moins une mémoire non volatile stockant des instructions qui, lorsqu'elles sont lues par l'unité centrale, entraînent la mise en oeuvre de fonctions.

Plus particulièrement, dans cet exemple, le microprocesseur 2 comporte :
- une unité de traitement 21 (PU), par exemple une machine d'états, un circuit logique programmable, etc. ;
- une ou plusieurs zones de stockage volatil, par exemple une mémoire 22 de type RAM, par exemple pour stocker temporairement des informations (instructions, adresses, données) pendant les traitements ;
- une ou plusieurs zones de stockage non volatil, par exemple une mémoire 23 de type flash (FLASH), pour stocker des informations de façon durable et en particulier quand le microprocesseur 2 n'est pas alimenté ;
- un ou plusieurs bus (non représentés) de données, d'adresses et/ou de commandes entre les différents éléments internes au microprocesseur 2 ; et
- une interface d'entrée-sortie 24 (I/O) de communication, par exemple de type bus série, avec l'extérieur du microprocesseur, par exemple pour programmer des fonctions et/ou enregistrer des données dans le microprocesseur 2.

Par ailleurs, le microprocesseur 2 peut intégrer d'autres fonctions, symbolisées par un bloc 25 (FCT), selon l'application, par exemple, un coprocesseur, d'autres interfaces, d'autres mémoires, etc.

Dans cet exemple, le microprocesseur 3 comporte :
- une unité de traitement 31 (PU), par exemple une machine d'états, un circuit logique programmable, etc. ;
- une ou plusieurs zones de stockage volatil 32, par exemple une mémoire 32 de type RAM, par exemple pour stocker temporairement des informations (instructions, adresses, données) pendant les traitements ;
- une ou plusieurs zones de stockage non volatil 33, par exemple une mémoire morte 33 de type ROM, pour stocker des informations de façon durable et en particulier quand le microprocesseur 3 n'est pas alimenté ; et
- un ou plusieurs bus (non représentés) de données, d'adresses et/ou de commandes entre les différents éléments internes au microprocesseur 3.

Par ailleurs, le microprocesseur 3 intègre généralement d'autres fonctions, symbolisées par un bloc 34 (FCT), selon l'application, par exemple, un crypto-processeur, d'autres mémoires, etc. De préférence, le microprocesseur 3 intègre au moins un circuit de cryptographie, ou crypto-processeur, pour chiffrer/déchiffrer des données, par exemple selon un algorithme AES GCM, un algorithme AES CBC ou un algorithme RSA.

Afin que le microprocesseur 3 puisse exposer des services au microprocesseur 2, et que le microprocesseur 2 puisse requérir l'accès à l'un de ces services, les microprocesseurs 2 et 3 partagent une interface sécurisée 4.

L'interface 4 comprend par exemple un espace de mémoire ou de stockage 42 (REG) faisant partie du microprocesseur 2, et un espace de mémoire ou de stockage 43 (REG) faisant partie du microprocesseur 3. Les espaces de stockage 42 et 43 sont de préférence des registres.

Lorsque le microprocesseur 2 souhaite accéder à un service exposé par le microprocesseur 3, il l'indique par une requête, en modifiant un ou plusieurs bits du registre 43.

Le microprocesseur 3 détecte cette requête et vient lire une zone mémoire spécifique, par exemple prédéterminée, de l'espace mémoire du microprocesseur 2, par exemple de la mémoire 22, où est enregistré un descripteur de requête. Un descripteur de requête correspond en pratique à des données indiquant à quel service du microprocesseur 3 le microprocesseur 2 souhaite accéder, et, le cas échéant, les paramètres déterminant comment le service appelé doit être mis en oeuvre.

Le microprocesseur 3 vérifie alors, dans une table d'indirection, si le service appelé est l'un des services du jeu de services qu'il expose. A titre d'exemple, la table d'indirection comprend plusieurs index de services, ou identifiants de services, dont chacun pointe vers un service du jeu de services exposés, ou vers un service non supporté. A titre d'exemple, un service non supporté correspond à une fonction indiquant que le service requis n'est pas disponible. Plus particulièrement, les index de services de la table d'indirection pointent chacun vers une adresse d'une mémoire du microprocesseur 3 où est stocké le code logiciel du service requis, c'est-à-dire les instructions qui, lorsqu'elles sont lues par l'unité 31, entraînent la mise en oeuvre du service par le microprocesseur 3, ce service pouvant être un service non supporté.

Lorsque la requête est valide et que la table d'indirection stockée dans le microprocesseur 3 comprend un index de service pointant vers le service requis, ce service est mis en oeuvre par le microprocesseur 3. A titre d'exemple, la mise en oeuvre du service requis comprend une étape de lecture par le microprocesseur 3, dans l'espace mémoire du microprocesseur 2, de données à traiter lors de la mise en oeuvre du service, par exemple de données à chiffrer lorsque le service appelé est un service de chiffrement de données. A titre d'exemple, l'adresse où sont enregistrées les données à traiter et la taille de ces dernières sont indiquées par des paramètres du descripteur de requête, lu précédemment par le microprocesseur 3.

Le microprocesseur 3 fournit ensuite, au microprocesseur 2, le résultat de la mise en oeuvre du service appelé. A titre d'exemple, le microprocesseur 3 enregistre dans une zone mémoire du microprocesseur 2, par exemple une zone de la mémoire 22, les données résultant de l'exécution du service, par exemple des données chiffrées lorsque le service requis est un service de chiffrement. L'adresse où sont enregistrées ces données est par exemple indiquée par un paramètre du descripteur de requête, lu précédemment par le microprocesseur 3.

De préférence, le microprocesseur 3 indique également la fin du traitement, c'est-à-dire la fin de la mise en oeuvre du service appelé, par exemple en modifiant un ou plusieurs bits du registre 42 du microprocesseur 2.

Ainsi, le microprocesseur 2 n'accède pas au contenu du microprocesseur 3, c'est-à-dire au contenu (instructions et données) des mémoires 32 et 33 du microprocesseur 3.

Bien que l'on ait représenté ici un système 1 ne comprenant qu'un seul microprocesseur 3 sécurisé et un seul microprocesseur 2 non sécurisé pouvant appeler les services exposés par le microprocesseur 3, le système peut comprendre d'autres microprocesseurs sécurisés, et/ou d'autres microprocesseurs non sécurisés. Dans un tel système, à chaque fois qu'un microprocesseur sécurisé expose un jeu de services à un autre microprocesseur du système, une interface du type de l'interface 4 est prévue entre ces deux microprocesseurs, et le fonctionnement décrit ci-dessus en relation avec la figure 1 est mis en oeuvre. Cela permet que le contenu du microprocesseur sécurisé ne soit pas accessible aux microprocesseurs du système. En outre, bien que cela ne soit pas détaillé ici, un même microprocesseur sécurisé du système peut exposer son jeu de services à plusieurs autres microprocesseurs du système.

La figure 2 représente, de manière schématique, un exemple de mode de réalisation de données 200 utilisées dans le système de la figure 1, et plus particulièrement un exemple de mode de réalisation d'un descripteur de requête 200.

Les données 200 sont représentatives d'un identifiant 201 (CMD) du service appelé, par exemple un code binaire identifiant le service appelé.

Les données 200 sont également représentatives de paramètres 202, dans cet exemple cinq paramètres P1, P2, P3, P4 et P5, représentatifs de la façon dont le service appelé doit être mis en oeuvre. Selon le service appelé, certains de ces paramètres peuvent être nuls, c'est-à-dire inutilisés. A titre d'exemple, lorsque le service appelé est un service de chiffrement de données par un algorithme AES ECB :
- le paramètre P1 est représentatif de la clé à utiliser pour le chiffrement, par exemple d'un identifiant d'une clé stockée dans le microprocesseur 3 ;
- le paramètre P2 est représentatif d'une adresse de début d'une zone de l'espace mémoire du microprocesseur 2 où sont stockées les données à chiffrer, par exemple une adresse de la mémoire 22 ;
- le paramètre P3 est représentatif d'une adresse de début d'une zone de l'espace mémoire du microprocesseur 2 où seront enregistrées ou écrites les données chiffrées par le microprocesseur 3, par exemple une adresse de la mémoire 22 ;
- le paramètre P4 est représentatif de la taille des données à chiffrer ; et
- le paramètre P5 n'est pas utilisé.

Suite à l'émission par le microprocesseur 2, via l'interface 4, d'une requête d'accès à un service exposé par le microprocesseur 3, les données 200 sont lues par le microprocesseur 3, à une adresse mémoire prédéfinie de l'espace mémoire du microprocesseur 2, par exemple à une adresse prédéfinie de la mémoire 22. Cette adresse prédéfinie est de préférence la même quel que soit le service appelé, c'est-à-dire la même pour chaque requête transmise, via l'interface 4, du microprocesseur 2 au microprocesseur 3. De préférence, cette adresse est définie à la conception du système 1, et plus particulièrement à la conception du microprocesseur 3. Le microprocesseur 2 est alors par exemple conçu ou programmé pour enregistrer à cette adresse prédéfinie de son espace mémoire, à chaque fois qu'il émet une requête d'accès à un service exposé par le microprocesseur 3, le descripteur de requête correspondant.

Bien que l'on ait décrit ici un descripteur de requête 200 comprenant cinq paramètres P1 à P5, dans des variantes de réalisation le descripteur de requête 200 comprend un nombre non nul quelconque de paramètres, de préférence au moins deux paramètres à savoir une adresse mémoire où sont stockées des données, et une taille des données stockées.

Dans la suite de la description, on considère le cas où des codes logiciels des services exposés par le microprocesseur 3 sont enregistrés dans la mémoire 33 du microprocesseur 3 dont le contenu est figé. On considère en outre que la table d'indirection entre les index de service et les services respectifs (supportés ou non) correspondant à ces index de services, est initialisée à partir du contenu de la mémoire non volatile 33, et est enregistrée dans la mémoire volatile 32.

Dans le système 1, on pourrait penser à modifier le jeu de services exposés par le microprocesseur 3 en modifiant le contenu de sa mémoire 33. Toutefois, cela n'est pas possible du fait le contenu de la mémoire 33 est figé, c'est-à-dire qu'il ne peut plus être modifié.

A titre d'exemple, lorsque la mémoire 33 est une mémoire dont le contenu pourrait être reprogrammé, par exemple une mémoire de type flash, le microprocesseur 3 est dépourvu d'interface permettant une telle reprogrammation de son contenu. En effet, en reprogrammant une partie du contenu de la mémoire 33, des personnes malveillantes pourraient accéder à des informations confidentielles qui y sont stockées, notamment à des informations sur le fonctionnement des services exposés par le microprocesseur 3.

A titre d'exemple encore, lorsque la mémoire 33 est une mémoire morte, son contenu n'est pas modifiable et est déterminé lors de la fabrication de la mémoire 33, par exemple grâce aux masques utilisés pour fabriquer cette mémoire.

Pour modifier ou faire évoluer le jeu de services exposés par le microprocesseur 3, on pourrait prévoir une nouvelle mémoire 33 avec un nouveau contenu figé correspondant au jeu de services modifié, ce qui implique, en pratique, de prévoir un nouveau microprocesseur 3. Cela entraîne divers inconvénients, notamment en ce qui concerne le temps de conception, les ressources et le coût liés à la prévision du nouveau microprocesseur 3.

Les inventeurs prévoient ici de faire évoluer, de manière sécurisée, le jeu de services exposés par le microprocesseur 3, en modifiant, de manière sécurisée, la mémoire 32 du microprocesseur 3. Plus particulièrement, les inventeurs prévoient de modifier, dans la mémoire 32, la table d'indirection entre les index de services et les services respectifs (supportés ou non) vers lesquels pointent ces index.

Plus particulièrement, afin de ne pas exposer le contenu du microprocesseur 3 à des personnes malveillantes, les inventeurs prévoient que la modification de la mémoire 32 du microprocesseur 3 s'effectue suite à une requête, du microprocesseur 2 via l'interface sécurisée 4, d'accès à un service de modification de la mémoire 32. De préférence, le code logiciel correspondant à ce service de modification de la mémoire 32 est enregistré dans la mémoire non volatile 33 du microprocesseur 3. La modification à appliquer à la mémoire 32 est par exemple programmée dans le microprocesseur 2, de préférence dans une mémoire non volatile du microprocesseur 2, par une personne habilitée, par exemple par le fabriquant du microprocesseur 3 ou par une personne autorisée par ce dernier. Du fait que la mémoire 32 est une mémoire volatile, cette modification de la mémoire 32 est de préférence mise en oeuvre à chaque mise sous tension ou démarrage du système 1.

Les inventeurs tirent ici profit du fonctionnement du microprocesseur 3, et plus généralement du système 1, permettant au microprocesseur 2 d'appeler de manière sécurisée, via l'interface 4, les services exposés par le microprocesseur 3.

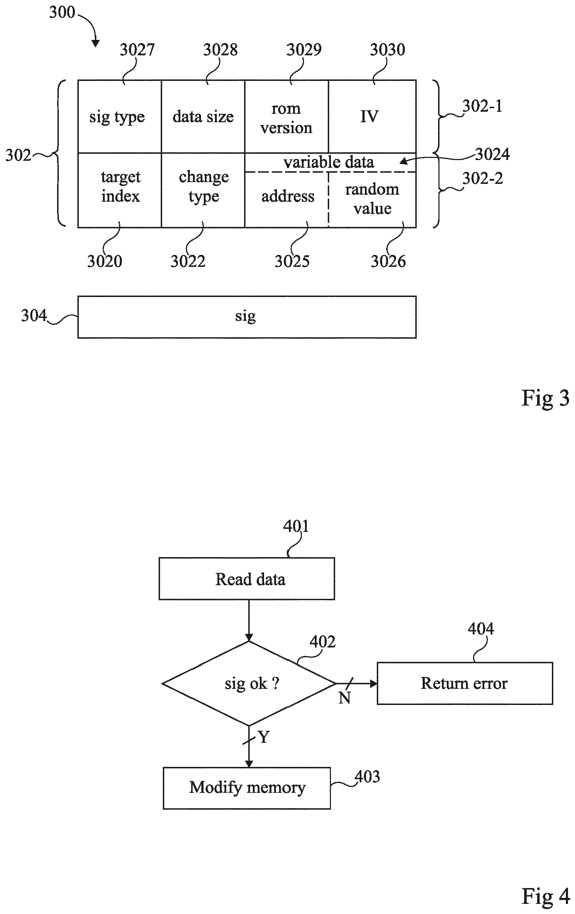

La figure 3 représente, de manière schématique, un mode de réalisation de données 300 utilisées dans le système de la figure 1 pour mettre en oeuvre une modification d'une mémoire d'un microprocesseur sécurisé, dans cet exemple une modification de la mémoire 32 du microprocesseur 3 de la figure 1.

Dans ce mode de réalisation, la mémoire 33 du microprocesseur 3 comprend les codes logiciels des services exposés par le microprocesseur 3 aux autres microprocesseurs du système 1, chacun de ces services exposés étant pointé par un index de service correspondant de la table d'indirection. On considère en outre que la mémoire 33 du microprocesseur 3 comprend un ou plusieurs codes logiciels correspondant à un ou plusieurs services respectifs qui ne sont pas exposés par le microprocesseur 3. Autrement dit, lors de la conception du microprocesseur 3, et plus particulièrement de sa mémoire 33, on prévoit des services supplémentaires qui pourraient devenir, si besoin, des services exposés par le microprocesseur 3.

Les données 300 sont stockées dans le microprocesseur 2.

Selon un mode de réalisation, l'adresse mémoire ou l'emplacement mémoire où sont enregistrées les données 300 est de préférence indiqué par un paramètre du descripteur de requête (figure 2), par exemple le paramètre P1, que le microprocesseur 3 vient lire, dans le microprocesseur 2, suite à la réception, via l'interface 4, d'une requête d'accès à un service exposé par le microprocesseur 3.

Selon un mode de réalisation, un autre paramètre du descripteur de requête, par exemple le paramètre P2, indique la taille des données 300.

A titre d'exemple, les données 300 sont enregistrées dans la mémoire 22. L'enregistrement des données 300 dans la mémoire 22 résulte par exemple d'une recopie, dans la mémoire 22, de données enregistrées dans la mémoire 23 du microprocesseur 2. Ces données enregistrées dans la mémoire 23 ont par exemple été générées par une personne habilitée, puis programmées dans la mémoire 23 du microprocesseur 2.

Les données 300 comprennent des données 302 représentatives de la modification à effectuer dans la mémoire 32 du microprocesseur 3. Les données 300 comprennent en outre une signature 304 ("sig").

La signature 304 a été générée par une personne habilitée à demander une modification de la mémoire 32 du microprocesseur 3.

La signature 304 a été générée à partir de tout ou partie des données 302, de préférence à partir de toutes les données 302, au moyen d'un algorithme de chiffrement asymétrique, de préférence un algorithme de chiffrement RSA. En particulier, la personne habilitée détient la clé privée, et la clé publique correspondante est connue du microprocesseur 3, par exemple stockée dans le microprocesseur 3.

Les données 302 sont représentatives d'un index cible 3020 ("target index") auquel s'applique la modification de la mémoire 32. Dans ce mode de réalisation, l'index cible 3020 correspond à un index de service de la table d'indirection entre les index de services et leurs codes logiciels respectifs.

Les données 302 sont en outre représentatives d'un paramètre 3022 ("change type") dont la valeur détermine le type de modification à mettre en oeuvre dans la mémoire 32.

Dans ce mode de réalisation, la valeur du paramètre 3022 est sélectionnée parmi une première valeur RS et une deuxième valeur IR. Lorsque le paramètre 3020 est à la valeur RS, cela signifie que le service exposé pointé par l'index de service égal à l'index cible 3020 doit être supprimé du jeu de services exposés, en faisant pointer cet index de service vers un service non supporté, c'est-à-dire, par exemple, la fonction indiquant que le service requis n'est pas disponible. Lorsque le paramètre 3020 est à la valeur IR, cela signifie que le service exposé pointé par l'index de service égal à l'index cible 3020 doit être remplacé par un service préexistant enregistré dans la mémoire 33, de préférence un service préexistant encore non exposé. En pratique, l'une ou l'autre des modifications ci-dessus correspond à une modification de la table d'indirection entre les index de services et les services respectifs (supportés ou non) vers lesquels pointent ces index de services. Cela correspond donc à une modification de la mémoire 32 où est stockée cette table d'indirection.

Les données 302 sont également représentatives de données variables 3024 ("variable data"). Le contenu des données variables 3024 dépend notamment de la valeur du paramètre 3022, ou, autrement dit, les données variables 3024 représentent des informations différentes en fonction de la valeur du paramètre 3022.

Selon un mode de réalisation, lorsque le paramètre 3022 est à la valeur IR, les données variables 3024 comprennent l'adresse 3025 ("address"), dans la mémoire 33, du service encore non exposé vers lequel l'index de service égal à l'index cible 3020 pointera après la modification de la mémoire 32. De préférence, les données variables 3024 ont une taille fixe, et comprennent, le cas échéant, des données de remplissage 3026 ("random value"). Lorsque le paramètre 3022 est à la valeur RS, les données variables 3024 ne comprennent que des données de remplissage 3026. De préférence, les données de remplissage 3026 sont générées de manière aléatoire ce qui rend plus difficile les attaques de personnes malveillantes, notamment quand la signature 304 a été générée à partir au moins des données variables 3024.

Les données 302 peuvent être représentatives de nombreuses autres informations.

De préférence, les données 302 sont notamment représentatives du type 3027 ("sig type") d'algorithme utilisé pour générer la signature 304.

De préférence, les données 302 sont notamment représentatives de la taille totale 3028 ("data size") des données 302, c'est-à-dire de la taille des données 300 sans la clé 304.

De préférence, les données 302 sont notamment représentatives de la version 3029 ("rom version") de la mémoire non volatile 33 du microprocesseur 3. En effet, le contenu figé de la mémoire 33 peut être différent d'une version à une autre de la mémoire 33. En particulier, cela peut permettre d'identifier, quand le paramètre 3022 est à la valeur IR, que l'adresse 3025 ne correspond pas à l'adresse d'un service enregistré dans la mémoire 33.

Selon un mode de réalisation préféré, comme cela est illustré en figure 3, les données 302 comprennent des données 302-1 non chiffrées, et des données 302-2 chiffrées. De préférence les données 302-2 ont été chiffrées par un algorithme de chiffrement symétrique, par exemple de type AES, de préférence de type AES CBC. De préférence, l'algorithme de type AES utilise un vecteur d'initialisation 3030 ("IV") généré de manière aléatoire. Les données non chiffrées 302-1 sont alors représentatives de ce vecteur d'initialisation 3030. Selon un mode de réalisation, l'algorithme de type AES utilise la totalité des données non chiffrées comme vecteur d'initialisation.

Cela rend plus difficiles les attaques par des personnes malveillantes du fait que les données ou paramètres critiques de la modification à appliquer à la mémoire 32, à savoir le type 3022 de modification à mettre en oeuvre, l'index cible 3020 concerné par cette modification et, le cas échéant, l'adresse 3025 d'un service préexistant enregistré dans la mémoire 33, sont chiffrées.

De préférence, la taille des données 302-1 et 302-2 est fixe et identique quelle que soit la modification requise de la mémoire 32.

La figure 4 représente, de manière schématique et sous la forme de blocs, un mode de réalisation d'une modification d'une mémoire d'un microprocesseur, dans cet exemple de la mémoire 32 du microprocesseur 3.

A une étape 401 (bloc "Read data"), suite à la réception, via l'interface 4 (figure 1), d'une requête d'accès à un service sécurisé, le microprocesseur 3 va lire à l'adresse indiquée par un descripteur de requête, par exemple l'adresse indiquée par le paramètre P1 du descripteur de requête 200 de la figure 2, les données représentatives de la modification à mettre en oeuvre dans la mémoire 32, par exemple les données 302 décrites en relation avec la figure 3. En outre, à l'étape 401, le microprocesseur 3 lit une signature associée aux données représentatives de la modification à mettre en oeuvre dans la mémoire 32, par exemple la signature 304 associée aux données 302. La signature associée aux données représentatives de la modification à appliquer dans la mémoire 32 a été générée, par une personne habilitée à demander une modification de la mémoire 32, à partir d'un algorithme de chiffrement asymétrique, de tout ou partie de ces données et d'une clé privée détenue par cette personne habilitée.

A une étape 402 suivante (bloc "sig ok?"), le microprocesseur 3 vérifie à partir des données 302 et de la signature 304, que la demande de modification de sa mémoire 32 est authentique, c'est-à-dire que les données 302 ont bien été générées par une personne habilitée.

Pour cela, de manière classique, le microprocesseur 3 génère une donnée intermédiaire, couramment appelée hash, à partir des données 302. Le microprocesseur 3 déchiffre la signature 304 avec sa clé publique, par exemple au moyen d'un circuit de déchiffrement adapté du microprocesseur 3 (bloc 34, figure 1). Le microprocesseur 3 vérifie ensuite que la signature déchiffrée est identique au hash généré.

Si ce n'est pas le cas (sortie N du bloc 402), le procédé se poursuit à une étape 404 suivante (bloc "Return error") marquant la fin du procédé, et la mémoire 32 n'est pas modifiée. De préférence, à l'étape 404, le microprocesseur 3 indique au microprocesseur 2 qu'il n'a pas effectué la modification requise de la mémoire 32, par exemple via l'interface 4, par exemple en modifiant un ou plusieurs bits du registre 42 du microprocesseur 2.

Si c'est le cas (sortie Y du bloc 402), les données 302 sont authentiques. En outre, les données 302 sont intègres, c'est-à-dire qu'elles n'ont pas été modifiées depuis que la signature a été générée par une personne habilitée. Le procédé se poursuit alors à une étape 403 suivante (bloc "Modify memory") où le microprocesseur 3 met en oeuvre une modification de la mémoire 32 conformément aux données 302. Par exemple, le microprocesseur 3 modifie la table d'indirection entre des index de services et des services respectifs (supportés ou non) vers lesquels pointent ces index, en modifiant le service vers lequel pointe un index de service concerné par la modification. De préférence, une fois que la mémoire 32 a été modifiée, le microprocesseur 3 l'indique au microprocesseur 2, par exemple via l'interface 4, par exemple en modifiant un ou plusieurs bits du registre 42 du microprocesseur 2.

Selon un mode de réalisation où les données 302 comprennent des données chiffrées 302-2, l'étape 403 comprend une étape de déchiffrement des données 302-2, par exemple au moyen d'un circuit de déchiffrement adapté du microprocesseur 3 (bloc 34, figure 1).

Selon un mode de réalisation où les données 302 sont notamment représentatives de la version 3029 ("rom version") de la mémoire non volatile 33 du microprocesseur 3, l'étape 401 comprend une étape consistant à vérifier que la version 3029 indiquée par les données 302 correspond bien à la version de la mémoire non volatile 33 du microprocesseur. Si ce n'est pas le cas, le procédé peut être interrompu.

Selon un mode de réalisation, l'étape 401 peut comprendre une vérification que la signature a bien une taille attendue. Si ce n'est pas le cas, le procédé peut être interrompu.

Le procédé décrit ci-dessus permet de modifier le jeu de services exposés par le microprocesseur 3, sans avoir à modifier le contenu de la mémoire 33, ce qui ne serait pas possible du fait que ce contenu est figé.

En outre, cette modification est mise en oeuvre de manière sécurisée, du fait que seule une personne habilitée possédant la clé privée peut générer la signature associée aux données représentatives de la modification à mettre en oeuvre dans la mémoire 32. Cette signature et les données auxquelles elle est associée sont ensuite enregistrées dans le microprocesseur 2 et le microprocesseur 2 est programmé pour émettre la demande correspondante de modification de la mémoire 32.

De plus, cette modification de la mémoire 32, qui est représentative d'une modification du jeu de services exposés par le microprocesseur 3, utilise un procédé sécurisé d'appel au service de modification de la mémoire 32, à savoir le procédé sécurisé d'appel à l'un quelconque des services exposés par le microprocesseur 3.

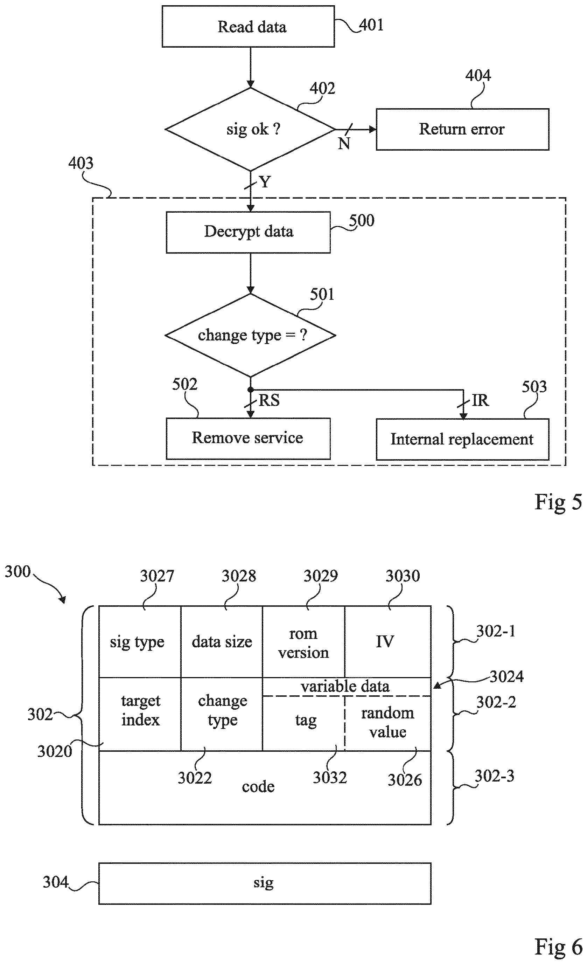

La figure 5 représente, de manière plus détaillée et sous la forme de blocs, le procédé de la figure 4. Plus particulièrement, la figure 5 illustre de manière plus détaillée la mise en oeuvre du procédé de la figure 4, à partir des données 300 décrites en relation avec la figure 3. Dans ce mode de réalisation, on considère que les données 300 comprennent des données chiffrées 302-2 et des données non chiffrées 302-1.

A l'étape 401, le microprocesseur 3 lit, dans le microprocesseur 2, les données 300 de la manière décrite en relation avec la figure 4.

A l'étape 401, selon un mode de réalisation dans lequel les données 302-1 sont représentatives de la taille 3028 des données 300 (figure 3), de préférence, le microprocesseur 3 vérifie la taille des données 300. Par exemple, le microprocesseur compare cette taille 3028 de données avec la taille des données 300 indiquée dans le descripteur de requête, par exemple le descripteur de requête 200 de la figure 2, par exemple la taille indiquée par le paramètre P2 de ce descripteur 200. Si ces tailles de données ne sont pas égales l'une à l'autre, le microprocesseur 3 interrompt le procédé de modification de sa mémoire 32, par exemple de manière similaire à ce qui a été décrit en relation avec l'étape 404 décrite en relation avec la figure 4.

A l'étape 401, selon un mode de réalisation dans lequel les données 302-1 sont représentatives de la taille 3028 des données 300 (figure 3), de préférence, le microprocesseur 3 vérifie qu'il dispose de suffisamment d'espace de stockage libre dans la mémoire 32 pour manipuler les données 300, c'est-à-dire par exemple pour y enregistrer les données 302. Si ce n'est pas le cas, le microprocesseur 3 interrompt le procédé de modification de sa mémoire 32, par exemple de manière similaire à ce qui a été décrit en relation avec l'étape 404 décrite en relation avec la figure 4.

A l'étape 401, en plus de lire les données 302, selon un mode de réalisation dans lequel les données 302-1 sont représentatives de la version 3029 de la mémoire 33, de préférence, le microprocesseur 3 vérifie qu'il comprend la bonne version 3029 de la mémoire 33. Si ce n'est pas le cas, le microprocesseur 3 interrompt le procédé de modification de sa mémoire 32, par exemple de manière similaire à ce qui a été décrit en relation avec l'étape 404 décrite en relation avec la figure 4.

A l'étape 401, de préférence, le microprocesseur 3 vérifie que la signature 304 a la taille attendue. Si ce n'est pas le cas, le microprocesseur 3 interrompt le procédé de modification de sa mémoire 32, par exemple de manière similaire à ce qui a été décrit en relation avec l'étape 404 décrite en relation avec la figure 4.

A l'étape 401, le microprocesseur 3 peut mettre en oeuvre une étape consistant à importer les données 300 dans sa mémoire 32, et plus particulièrement les données 302-1 et 302-2. Cette étape d'importation des données 302-1 et 302-2 peut être conditionnée par l'étape de vérification de la taille des données 300 et/ou de la signature telles que décrites ci-dessus.

Le microprocesseur met ensuite en oeuvre l'étape 402 décrite en relation avec la figure 4. De préférence, la façon dont est mise en oeuvre l'étape 402 est déterminée par le type d'algorithme de chiffrement asymétrique utilisé pour générer la signature 304, les données non chiffrées 302-1 étant alors représentatives du type 3027 de cet algorithme.

L'étape 403 débute ici par une étape 500 (bloc "Decrypt data") de déchiffrement des données chiffrées 302-2, par exemple au moyen d'un circuit de déchiffrement adapté du microprocesseur 3 (bloc 34, figure 1).

Selon un mode de réalisation dans lequel les données 302-2 ont été chiffrées par un algorithme de chiffrement symétrique utilisant un vecteur d'initialisation, le microprocesseur 3 déchiffre les données 302-2 en utilisant le même vecteur d'initialisation, les données non chiffrées 302-1 étant représentatives de ce vecteur d'initialisation 3030. De préférence, le microprocesseur 3 déchiffre les données 302-2 en utilisant la totalité des données 302-1 comme vecteur d'initialisation.

L'étape 403 comprend en outre une étape 501 suivante (bloc "change type =?") où, à partir des données 302-2 déchiffrées à l'étape 500, le microprocesseur 3 détermine quel type de modification de la mémoire 32 doit être mis en oeuvre. Pour cela, le microprocesseur 3 regarde à quelle valeur, dans ce mode de réalisation IR ou RS, est égal le paramètre 3022.

Si le paramètre 3022 est à la valeur RS (sortie RS du bloc 501), le procédé se poursuit à une étape 502 suivante (bloc "Remove service") de l'étape 403. A l'étape 502, le microprocesseur 3 modifie la table d'indirection entre les index de services et les services respectifs (supportés ou non) pointés par ces index, c'est-à-dire modifie le contenu de sa mémoire 32 où est stockée cette table d'indirection. Plus exactement, le microprocesseur 3 cherche dans la table d'indirection l'index de service qui est égal à l'index cible 3020, et vient modifier l'adresse vers laquelle pointe cet index de service pour qu'il pointe vers l'adresse d'un service non supporté, c'est-à-dire, par exemple, l'adresse de la fonction indiquant que le service requis n'est pas disponible. Autrement dit, le microprocesseur 3 fait pointer l'index de service égal à l'index cible 3020 vers le service non supporté. Cela revient à supprimer un service du jeu de services exposés par le microprocesseur 3.

Si le paramètre 3022 est à la valeur IR (sortie IR du bloc 501), le procédé se poursuit à une étape 503 suivante (bloc "Internal replacement") de l'étape 403. A l'étape 503, le microprocesseur 3 modifie la table d'indirection entre les index de services et les services respectifs (supportés ou non) pointés par ces index, c'est-à-dire modifie le contenu de sa mémoire 32 où est stockée cette table d'indirection. Plus exactement, le microprocesseur 3 cherche dans la table d'indirection l'index de service qui est égal à l'index cible 3020, et vient modifier l'adresse vers laquelle pointe cet index de service pour qu'il pointe vers l'adresse 3025 du code logiciel d'un service enregistré dans la mémoire 33 mais encore non exposé par le microprocesseur 3. Autrement dit, le microprocesseur 3 fait pointer l'index de service égal à l'index cible 3020 vers un service préexistant dans la mémoire 33 mais encore non exposé par le microprocesseur 3. Si, avant la modification de la table d'indirection, cet index de service pointait vers un service non supporté, cela revient à ajouter un service au jeu de services exposés par le microprocesseur 3. Si, avant la modification de la table d'indirection, cet index de service pointait vers un service du jeu de services exposés par le microprocesseur 3, cela revient à remplacer ce service par un autre service.

Les étapes 502 et 503 marquent la fin du procédé de modification de la mémoire, ces étapes se terminant de la manière décrite en relation avec l'étape 403 de la figure 4.

Selon une variante de réalisation, on prévoit qu'un service non préexistant dans la mémoire 33 du microprocesseur 3 puisse être ajouté au jeu de services exposés par le microprocesseur 3.

Pour cela, les inventeurs prévoient que les données 300 comprennent, en plus de ce qui a été décrit en relation avec la figure 3, le code logiciel correspondant à ce nouveau service, et, en outre, que ce code logiciel soit importé dans la mémoire 32. La table d'indirection entre les index de service et les codes logiciels des services correspondants est ensuite modifiée pour que l'un de ces index pointe vers le code logiciel importé, c'est-à-dire vers l'adresse de la mémoire 32 où est enregistré ce code logiciel.

En particulier, dans cette variante, on prévoit que le paramètre 3022 indiquant quel type de modification de la mémoire 32 doit être mis en oeuvre puisse prendre la valeur RS, la valeur IR mais aussi une valeur IS. Lorsque le paramètre est à la valeur IS, cela signifie que la modification à mettre en oeuvre dans la mémoire 32 consiste à y enregistrer le code logiciel d'un nouveau service, et à modifier en conséquence la table d'indirection entre les index de services et les codes logiciels des services correspondants, de sorte que ce nouveau service soit exposé par le microprocesseur 3.

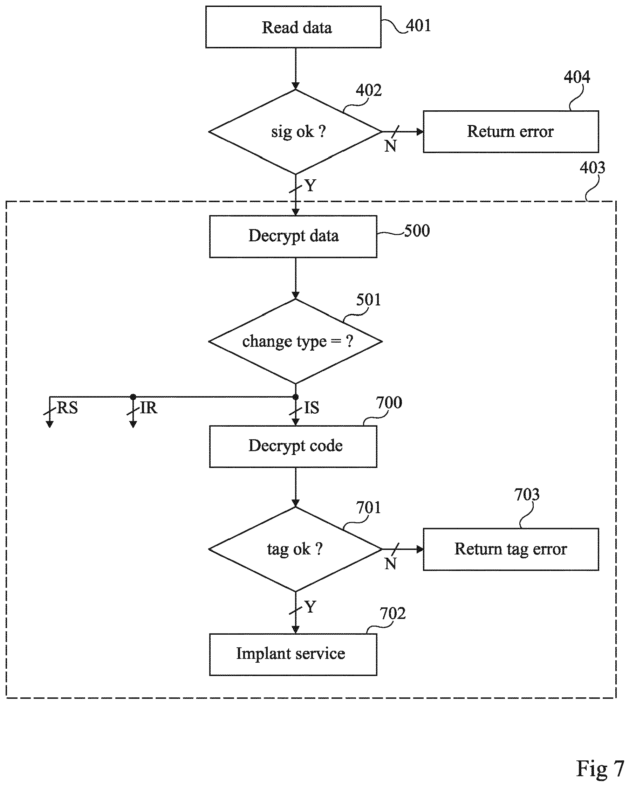

Cette variante va maintenant être décrite plus en détails en relation avec les figures 6 et 7.

La figure 6 représente les données 300 décrites en relation avec la figure 3, dans le cas où le paramètre 3022 est à la valeur IS. Seules les différences entre les données 300 de la figure 3 et les données 300 de la figure 6 sont ici mises en exergue.

En figure 6, les données 300, et plus particulièrement les données 302, comprennent des données 302-3 représentatives du code logiciel du nouveau service, en plus des données non chiffrées 302-1 et des données chiffrées 302-2.

Selon un mode de réalisation préféré, les données 302-3 ont été chiffrées, par exemple par un algorithme de chiffrement symétrique, par exemple de type AES, de préférence en utilisant le vecteur d'initialisation 3030, voire la totalité des données 302-1 (comprenant le vecteur d'initialisation 3030) comme vecteur d'initialisation.

La prévision du chiffrement du code logiciel du nouveau service permet d'éviter que ce code logiciel ne soit lu par des personnes malveillantes, par exemple pour en déduire des informations sur le fonctionnement interne du microprocesseur 3 et/ou sur le fonctionnement du nouveau service.

Selon un mode de réalisation encore plus préférentiel, les données 302-3 ont été chiffrées préalablement aux données 302-2, et, lors du chiffrement des données 302-3, par exemple au moyen d'un algorithme de type AES GCM, un code d'intégrité 3032 ("tag") a été généré. Les données variables 3024 sont alors représentatives de ce code d'intégrité 3032, et, le cas échéant, de données de remplissage 3026.

La prévision d'un tel code d'intégrité 3032 permet de s'assurer que le code logiciel du nouveau service n'a pas été modifié par une personne malveillante, par exemple une personne qui souhaiterait importer un code logiciel malveillant dans le microprocesseur 3 afin d'obtenir, lors de l'exécution de ce logiciel malveillant, des informations sur le fonctionnement interne du microprocesseur 3.

Selon un mode de réalisation, lorsque les données 302 comprennent les données 302-3, la signature 304 a été générée à partir des données 302-1, 302-2 et 302-3. On pourrait alors penser que la prévision d'un code d'intégrité 3032 est redondante avec la prévision de la signature 304 obtenue par chiffrement asymétrique, en particulier en ce qui concerne l'intégrité du code logiciel du nouveau service. Toutefois, le code d'intégrité 3032 permet d'éviter qu'un code logiciel malveillant ne soit importé dans le microprocesseur 3 même dans le cas où une personne malveillante aurait réussi à falsifier la signature 304.

Dans la variante de réalisation illustrée par la figure 6, dans le cas où le paramètre 3022 a la valeur IR ou RS, les données 300 ne comprennent pas les données 302-3, et sont alors similaires aux données 300 décrites en relation avec la figure 3.

La figure 7 illustre, sous la forme de blocs, une variante de réalisation du procédé de la figure 5. Seules les différences entre le procédé de la figure 5 et celui de la figure 7 sont ici mises en exergue.

Les étapes 401, 402, 404 sont similaires ou identiques à celles décrites en relation avec la figure 5.

L'étape 403 débute, comme en figure 5, par l'étape 500 au cours de laquelle le microprocesseur 3 déchiffre les données 302-2.

L'étape 403 comprend l'étape suivante 501 où le microprocesseur 3 détermine quel type de modification de la mémoire 32 doit être mis en oeuvre. Pour cela, le microprocesseur 3 regarde à quelle valeur, dans cette variante de réalisation IR, RS ou IS, est égal le paramètre 3022.

Si le paramètre 3022 est à la valeur RS (sortie RS du bloc 501), l'étape 403 se poursuit à l'étape 502 (non représentée), de la façon décrite en relation avec la figure 5. Dans cette variante de réalisation, si à l'étape 502 le code logiciel du service pointé par l'index de service égal à l'index cible 3020 est enregistré dans la mémoire 32, de préférence, le microprocesseur 3 commande la suppression de ce code logiciel de la mémoire 32, de manière à libérer de l'espace de stockage dans la mémoire 32.

Si le paramètre 3022 est à la valeur IR (sortie IR du bloc 501), l'étape 403 se poursuit à l'étape 503 (non représentée), de la façon décrite en relation avec la figure 5.

Si le paramètre 3022 est à la valeur IS (sortie IS du bloc 501), l'étape 403 se poursuit à une étape 700 (bloc "Decrypt code"). A l'étape 700, le microprocesseur 3 importe les données 302-3 représentatives du code logiciel à implanter dans la mémoire 32, et, de préférence en même temps qu'il importe ces données 302-3, déchiffre les données 302-3, par exemple au moyen d'un circuit de déchiffrement adapté du microprocesseur 3 (bloc 34, figure 1). Les données 302-3 déchiffrées, c'est-à-dire le code logiciel du nouveau service, sont ensuite enregistrées dans la mémoire 32.

Selon un mode de réalisation dans lequel les données 302-3 ont été chiffrées par un algorithme de chiffrement symétrique utilisant un vecteur d'initialisation, le microprocesseur 3 déchiffre les données 302-2 en utilisant le même vecteur d'initialisation, les données non chiffrées 302-1 étant représentatives de ce vecteur d'initialisation.

Selon un mode de réalisation dans lequel un code d'intégrité 3032 a été généré lors du chiffrement du code logiciel du nouveau service pour obtenir les données 302-3, lors du déchiffrement des données 302-3 par le microprocesseur 3, un autre code d'intégrité est généré. Dans ce mode de réalisation, après l'étape 700, l'étape 403 se poursuit alors à une étape 701 (bloc "tag ok?") où le microprocesseur vérifie que le code d'intégrité 3032 récupéré en déchiffrant les données 302-2 est identique au code d'intégrité généré lors du déchiffrement des données 302-3. Si c'est le cas (sortie Y du bloc 701), l'étape 403 se poursuit à une étape 702 (bloc "Implant service"). Si ce n'est pas le cas (sortie N du bloc 701), l'étape 403 se poursuit à une étape 703 (bloc "Return tag error"), similaire à l'étape 404.

De préférence, à l'étape 703, le microprocesseur 3 indique au microprocesseur 2 que la modification requise de la mémoire 32 n'a pas été effectuée, par exemple via l'interface 4, par exemple en modifiant un ou plusieurs bits du registre 42 du microprocesseur 2.

En outre, à l'étape 703, de préférence, le microprocesseur 3 efface le code logiciel qui a été enregistré dans la mémoire 32 à l'étape 700.

Selon un mode de réalisation dans lequel, lors du chiffrement du code logiciel du nouveau service pour obtenir les données 302-3, aucun code d'intégrité 3032 n'a été généré, lors du déchiffrement des données 302-3 par le microprocesseur 3, aucun autre code d'intégrité n'est généré. Dans ce mode de réalisation, après l'étape 700, l'étape 403 se poursuit alors directement à l'étape 702.

A l'étape 702, le microprocesseur 3 ajoute, dans son jeu de services exposés, le service dont le code logiciel a été enregistré dans la mémoire 32 à l'étape 700. Pour cela, le microprocesseur 3 modifie la table d'indirection entre les index de services et les codes logiciels des services (supportés ou non), pointés par ces index de services. Plus particulièrement, le microprocesseur 3 fait pointer l'index de service qui est égal à l'index cible 3020 vers l'adresse de la mémoire 32 où a été enregistré le code logiciel du nouveau service. Autrement dit, le microprocesseur 3 fait pointer l'index de service égal à l'index cible 3020 vers le nouveau service. Cela revient à ajouter un nouveau service du jeu de services exposés par le microprocesseur 3.

L'étape 702 marque la fin du procédé de modification de la mémoire 32, et se termine de la manière décrite en relation avec l'étape 403 de la figure 4.

En plus de ce qui a été décrit précédemment, dans une variante de réalisation décrite ci-dessous, on considère qu'un service dont le code logiciel est enregistré dans la mémoire 33 du microprocesseur 3, ou éventuellement dans la mémoire 32 du microprocesseur 3, puisse comprendre un point d'indirection. Ainsi, lors de l'exécution de ce code logiciel par le microprocesseur 3, l'exécution est interrompue au point d'indirection. A ce point d'indirection, le service comprend un test pour vérifier si un code logiciel correspondant à une mise à jour du service, c'est-à-dire un patch logiciel, est disponible en mémoire 32 et doit être exécuté à partir du point d'indirection.

Dans cette variante, le microprocesseur 3 comprend une table d'indirection comprenant des index de mise à jour dont chacun pointe ou non vers une mise à jour, c'est-à-dire vers un code logiciel correspondant à une mise à jour. On notera qu'une mise à jour peut correspondre à un code logiciel stocké dans la mémoire non volatile 32 du microprocesseur 3, une telle mise à jour correspondant alors à une partie initiale du code d'un service stocké en mémoire 32 et permettant la mise en oeuvre de ce service. Lorsqu'un index de mise à jour ne pointe vers aucune mise à jour, cet index pointe par exemple vers une fonction, c'est-à-dire du code logiciel, indiquant qu'aucune mise à jour n'est disponible pour cet index. Cette table d'indirection entre les index de mises à jour et les mises à jour correspondantes est initialisée à partir du contenu de la mémoire non volatile 33. Cette table d'indirection est enregistrée dans la mémoire volatile 32.

Ainsi, lors de l'exécution d'un service comprenant un point d'indirection, lorsque le microprocesseur 3 atteint le point d'indirection, il vérifie, dans la table d'indirection entre les index de mises à jour et les mises à jour, si l'index de mise à jour correspondant à ce point d'indirection pointe ou non vers une mise à jour. Si l'index de mise à jour pointe vers une mise à jour, c'est-à-dire vers le code logiciel de cette mise à jour, il l'exécute. A la fin de l'exécution de la mise à jour, l'exécution du service peut être reprise, après le point d'indirection. Si l'index de mise à jour ne pointe vers aucune mise à jour, l'exécution du service se poursuit.

La prévision d'un ou plusieurs points d'indirection dans le code logiciel d'un service permet de modifier une partie seulement de l'exécution du service grâce à une mise à jour du code à exécuter lorsque le microprocesseur atteint un point d'indirection. Cela permet notamment d'anticiper des modifications du service, par exemple pour corriger un éventuel dysfonctionnement du service ou pour satisfaire une requête d'un utilisateur du microprocesseur 3.

Les inventeurs prévoient, dans cette variante de réalisation, qu'une mise à jour d'un service puisse être supprimée en faisant pointer l'index de mise à jour correspondant vers aucune mise à jour. Dans cette variante, les inventeurs prévoient également qu'une nouvelle mise à jour puisse être importée dans la mémoire 32, en enregistrant le code logiciel de cette nouvelle mise à jour et en faisant pointer l'index de mise à jour correspondant vers ce code logiciel, donc vers la nouvelle mise à jour.

Ainsi, dans cette variante, le paramètre 3022 (figures 3 et 6) peut prendre deux valeurs supplémentaires, à savoir les valeurs RP et IP.

Lorsque le paramètre 3022 est à la valeur RP, cela signifie que la table d'indirection des index de mises à jour vers les mises à jour correspondantes doit être modifiée, de sorte que l'index de mise à jour égal à l'index cible 3020 pointe vers aucune mise à jour. Dans ce cas, les données 300 sont du type de celles décrites en relation avec la figure 3, à la différence que l'index cible 3020 correspond à un index de mise à jour, et non à un index de service. Les données 302 ne comprennent pas de données 302-3. En outre, dans ce cas, les données variables 3024 ne comprennent que des données de remplissage 3026.

Lorsque le paramètre 3022 est à la valeur IS, cela signifie que la modification à mettre en oeuvre dans la mémoire 32 consiste à y enregistrer le code logiciel d'un nouveau service, et à modifier en conséquence la table d'indirection entre les index de services et les codes logiciels des services correspondants, de sorte que ce nouveau service soit exposé par le microprocesseur 3.

Lorsque le paramètre 3022 est à la valeur IP, cela signifie que la modification à mettre en oeuvre dans la mémoire 32 consiste à y enregistrer le code logiciel d'une nouvelle mise à jour, et à modifier en conséquence la table d'indirection entre les index de mises à jour et les mises à jour pointées par ces index. Plus particulièrement, cette table d'indirection est modifiée de sorte que l'index de mise à jour égal à l'index cible 3020 pointe vers la nouvelle mise à jour, c'est-à-dire vers le code logiciel de cette nouvelle mise à jour, plus exactement, vers l'adresse de la mémoire 32 où est enregistré ce code logiciel. Dans ce cas, les données 300 sont du type de celles décrites en relation avec la figure 6, à la différence que l'index cible 3020 correspond alors à un index de mise à jour, et non à un index de service. Les données 302-3 sont alors représentatives du code logiciel de la nouvelle mise à jour.

Ce qui a été décrit en relation avec la figure 6 concernant les données 302 dans le cas où les données 302-3 sont représentatives du code logiciel d'un nouveau service, en particulier les avantages liés aux données 302, s'applique également lorsque les données 302-3 sont représentatives du code logiciel d'une nouvelle mise à jour.

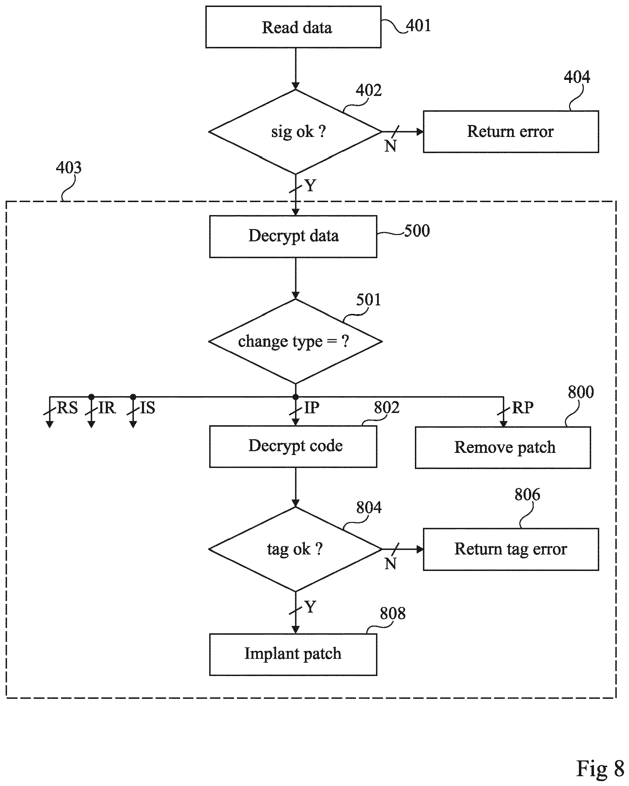

La figure 8 représente, sous la forme de blocs, une variante de réalisation du procédé des figures 5 et 7, dans le cas où le paramètre 3022 peut prendre les valeurs IP et RP. Plus particulièrement, dans cette variante, le paramètre 3022 peut prendre la valeur RS, la valeur IR, la valeur IS, la valeur IP, ou la valeur RP.

Seules les différences entre le procédé de la figure 7 et celui de la figure 8 sont ici mises en exergue.

Les étapes 401, 402, 404 sont identiques à celles décrites en relation avec la figure 7.

L'étape 403 débute, comme en figure 7, par l'étape 500 au cours de laquelle le microprocesseur 3 déchiffre les données 302-2.

L'étape 403 comprend l'étape suivante 501 où le microprocesseur 3 détermine quel type de modification de la mémoire 32 doit être mis en oeuvre. Pour cela, le microprocesseur 3 regarde à quelle valeur, dans cette variante de réalisation IR, RS, IS, IP ou RP, est égal le paramètre 3022.

Si le paramètre 3022 est à la valeur RS (sortie RS du bloc 501), l'étape 403 se poursuit à l'étape 502 (non représentée), de la façon décrite en relation avec la figure 5.

Si le paramètre 3022 est à la valeur IR (sortie IR du bloc 501), l'étape 403 se poursuit à l'étape 503 (non représentée), de la façon décrite en relation avec la figure 5.

Si le paramètre 3022 est à la valeur IS (sortie IS du bloc 501), l'étape 403 se poursuit à l'étape 700 (non représentée), de la façon décrite en relation avec la figure 7.

Si le paramètre est à la valeur RP (sortie RP du bloc 501), l'étape 403 se poursuit à une étape 800 (bloc "Remove patch"). A l'étape 800, le microprocesseur 3 modifie la table d'indirection entre les index de mise à jour et les mises à jour correspondantes, c'est-à-dire modifie le contenu de sa mémoire 32 où est stockée cette table d'indirection. Plus exactement, le microprocesseur 3 fait pointer l'index de mise à jour qui est égal à l'index cible 3020 vers une adresse ne correspondant à aucune mise à jour, par exemple vers l'adresse d'une fonction indiquant qu'aucune mise à jour n'est disponible pour cet index. Cela revient à ce que cet index de mise à jour ne pointe vers aucune mise à jour, donc à supprimer la mise à jour vers laquelle il pointait précédemment. De préférence, à cette étape 800, le microprocesseur 3 efface le code logiciel de la mise à jour vers laquelle pointait, avant la modification de la table d'indirection, l'index de mise à jour égal à l'index cible 3020. Puis, l'étape 800, et plus généralement le procédé de modification de la mémoire 32, se termine de la manière décrite en relation avec l'étape 403 de la figure 4.

Si le paramètre est à la valeur IP (sortie IP du bloc 501), l'étape 403 se poursuit à une étape 802 (bloc "Decrypt code"). L'étape 802 est similaire, voire identique, à l'étape 700 décrite en relation avec la figure 7.

Selon un mode de réalisation dans lequel les données 302-3 ont été chiffrées par un algorithme de chiffrement symétrique utilisant un vecteur d'initialisation 3030, le microprocesseur 3 déchiffre les données 302-2 en utilisant le même vecteur d'initialisation, les données non chiffrées 302-1 étant représentatives de ce vecteur d'initialisation 3030.

Selon un mode de réalisation dans lequel, lors du chiffrement du code logiciel de la nouvelle mise à jour pour obtenir les données 302-3, un code d'intégrité 3032 a été généré, lors du déchiffrement des données 302-3 par le microprocesseur 3, un autre code d'intégrité est généré. Dans ce mode de réalisation, après l'étape 802, l'étape 403 se poursuit alors à une étape 804 (bloc "tag ok?") similaire ou identique à l'étape 701 décrite en relation avec la figure 7. Plus particulièrement, à cette étape 804, le microprocesseur vérifie que le code d'intégrité 3032 contenu par les données 302-2 déchiffrées est identique au code d'intégrité généré lors du déchiffrement des données 302-3. Si c'est le cas (sortie Y du bloc 804), l'étape 403 se poursuit à une étape 808 (bloc "Implant patch"). Si ce n'est pas le cas (sortie N du bloc 804), l'étape 403 se poursuit à une étape 806 (bloc "Return tag error"), similaire à l'étape 703 (figure 7).

De préférence, à l'étape 806, le microprocesseur 3 efface le code logiciel qui a été enregistré dans la mémoire 32 à l'étape 802.

Selon un mode de réalisation dans lequel, lors du chiffrement du code logiciel de la nouvelle mise à jour pour obtenir les données 302-3, aucun code d'intégrité 3032 n'a été généré, lors du déchiffrement des données 302-3 par le microprocesseur 3, aucun autre code d'intégrité n'est généré. Dans ce mode de réalisation, après l'étape 802, l'étape 403 se poursuit alors directement à l'étape 808.

A l'étape 808, le microprocesseur 3 modifie la table d'indirection entre les index de mises à jour et les mises à jour pointées par au moins certains de ces index. Plus particulièrement, le microprocesseur 3 fait pointer l'index de mise à jour égal à l'index cible 3020, vers la nouvelle mise à jour, c'est-à-dire vers l'adresse de la mémoire 32 où est enregistré, à l'étape 802, le code logiciel de la nouvelle mise à jour. Si, avant la modification de la table d'indirection, cet index de mise à jour ne pointait vers aucune mise à jour, cela revient à ajouter une mise à jour au service concerné. Si, avant la modification de la table d'indirection, cet index de mise à jour pointait vers une mise à jour, cela revient à remplacer cette mise à jour par la nouvelle mise à jour.

L'étape 808, et plus généralement le procédé de modification de la mémoire 32, se termine de la manière décrite en relation avec l'étape 403 de la figure 4.

Dans une variante de réalisation non illustrée du procédé de la figure 8, après l'étape 501, si le paramètre 3022 est à la valeur IS ou IP, l'étape 403 se poursuit à l'étape 700 de la figure 7.

Dans cette variante non illustrée, si un code d'intégrité 3032 a été généré lors du chiffrement des données 302-3, l'étape 700 comprend, lors du déchiffrement des données 302-3, la génération d'un autre code d'intégrité, et l'étape se poursuit à l'étape 701 de la figure 7. Si, à l'étape 701, les codes d'intégrité sont identiques, l'étape 701 se poursuit par une nouvelle étape de test de la valeur du paramètre 3022. Si le paramètre 3022 est à la valeur IP, cette nouvelle étape de test est suivie de l'étape 808 de la figure 8, et si le paramètre est à la valeur IS, cette nouvelle étape de test est suivie de l'étape 702 de la figure 7.

Dans cette variante non illustrée, si aucun code d'intégrité n'a été généré lors du chiffrement des données 302-3, l'étape 700 se poursuit directement à la nouvelle étape de test de la valeur du paramètre 3022, et le procédé se poursuit alors de la manière décrite au paragraphe précédent.

On a décrit, en relation avec la figure 8, un procédé dans lequel le paramètre 3022 peut prendre une valeur quelconque parmi les valeurs RS, RP, IS, IP et IR. L'homme du métier est en mesure d'adapter ce procédé au cas où le paramètre 3022 peut prendre une valeur quelconque parmi uniquement certaines des valeurs RS, RP, IS, IP et IR, par exemple parmi les valeurs RS, RP, IP et IR uniquement.

Par ailleurs, les inventeurs prévoient, de manière optionnelle, un mode de réalisation d'un procédé de gestion d'un espace de stockage réservé dans la mémoire 32, pour que du code logiciel y soit enregistré lors de chaque mise en oeuvre de l'étape 702 ou de l'étape 808. Cet espace réservé correspond alors à une plage d'adresses mémoire successives de la mémoire 32. Cet espace réservé peut également être modifié lors de la mise en oeuvre de l'étape 800 et de l'étape 502 si cette dernière correspond à la suppression d'un service dont le code logiciel est enregistré dans l'espace de stockage réservé.

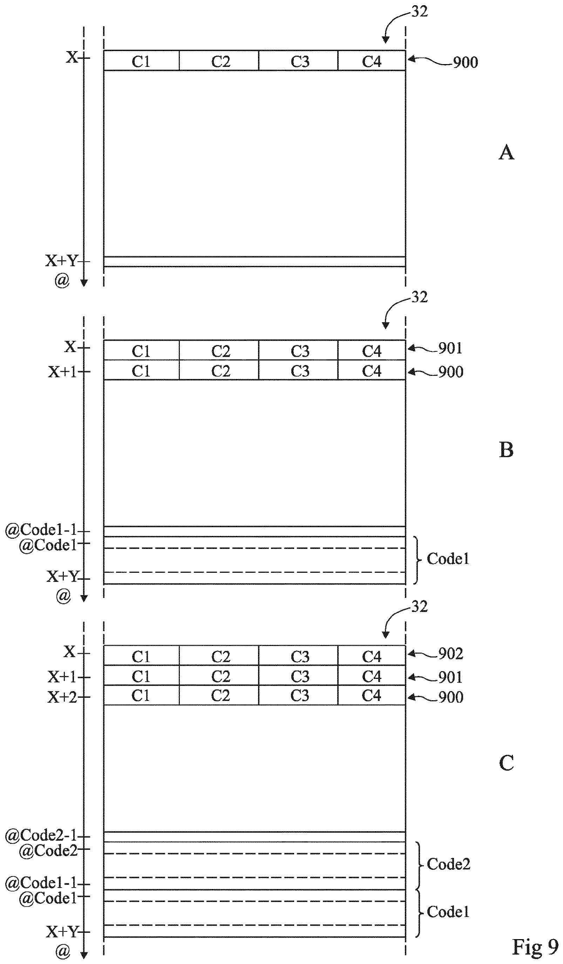

Ce procédé va maintenant être décrit en relation avec la figure 9. La figure 9 comprend trois vues A, B et C illustrant l'espace de stockage réservé respectivement dans un état initial, après la mise en oeuvre d'une étape 808, et après la mise en oeuvre, en outre, d'une étape 702. On considère ici que la plage d'adresses successives de la mémoire 32 correspondant à l'espace de stockage réservé débute à l'adresse X et se termine à l'adresse X+Y, chaque adresse correspondant à un mot mémoire de la mémoire 32. Autrement dit, l'espace de stockage réservé comprend un nombre Y+1 de mots mémoire, chacun identifié par une adresse.

Dans ce procédé, comme cela est illustré par la vue A de la figure 9, initialement, l'espace de stockage réservé ne contient aucun code logiciel. En outre, l'espace de stockage réservé comprend un mot mémoire 900 comprenant quatre champs C1, C2, C3 et C4 représentatifs respectivement d'un type de modification de la mémoire 32, d'un index de service ou de mise à jour concerné par la modification, d'une taille de code logiciel correspondant au service ou la mise à jour pointée par l'index concerné, et d'une adresse mémoire de l'espace de stockage réservé où est stocké ce code logiciel. Plus particulièrement, dans le mot mémoire 900, le champ C1 est à une valeur par défaut indiquant un type invalide de modification de la mémoire 32, le champ C2 est à une valeur par défaut indiquant un index invalide, le champ C3 est à une valeur par défaut, par exemple une valeur indiquant une taille nulle de code logiciel, et le champ C4 est à une valeur par défaut indiquant l'adresse, en partant de la fin de l'espace réservé, du premier mot mémoire libre de l'espace de stockage réservé, à savoir ici, l'adresse X+Y.

A l'état initial, le mot mémoire 900 est à l'adresse X de début de l'espace de stockage réservé.

En vue B de la figure 9, du code logiciel Code1, correspondant dans cet exemple à une mise à jour, a été enregistré dans l'espace de stockage réservé illustré en vue A, lors de la mise en oeuvre d'une étape 808.

Pour cela, le code Code1 a été enregistré dans l'espace de stockage réservé de sorte que la plage d'adresses successives du code Code1 s'étende à partir de l'adresse indiquée dans le champ C4 du mot 900 de la vue A, c'est-à-dire ici, l'adresse X+Y.

En outre, le champ C4 du mot 900 a été mis à une valeur indiquant l'adresse, en partant de la fin de l'espace réservé, du premier mot mémoire libre de l'espace de stockage réservé, dans cet exemple l'adresse @Code1-1.

Le mot 900 a ensuite été décalé d'une adresse, en direction de la fin de l'espace de stockage réservé, ici l'adresse X+1.

Un mot 901 comprenant quatre champs C1, C2, C3 et C4 a alors été enregistré à l'adresse de début de l'espace de stockage réservé, ici à l'adresse X. Le champ C1 du mot 901 est à une valeur indiquant que le type de modification de la mémoire concerne l'ajout d'un code logiciel d'une mise à jour. Le champ C2 du mot 901 est à une valeur indiquant l'index de mise à jour pointant vers le code Code1. Le champ C3 est à une valeur indiquant la taille du code Code1. Le champ C4 est à une valeur indiquant l'adresse de début de la plage d'adresses du code Code1, dans cet exemple l'adresse @Code1.

En vue C de la figure 9, du code logiciel Code2, correspondant à un nouveau service, a été enregistré dans l'espace de stockage réservé illustré par la vue B, suite à la mise en oeuvre d'une étape 702.

Pour cela, le code Code2 a été enregistré dans l'espace de stockage réservé de sorte que la plage d'adresses successives du code Code2 s'étende à partir de l'adresse indiquée dans le champ C4 du mot 900 de la vue B, dans cet exemple l'adresse @Code1-1. Plus particulièrement, la plage d'adresses successives du code Code2 se termine à l'adresse @Codel-1

En outre, le champ C4 du mot 900 a été mis à une valeur indiquant l'adresse, en partant de la fin de l'espace réservé, du premier mot mémoire libre de l'espace de stockage réservé, à savoir ici, l'adresse @Code2-1.

Les mots 900 et 901, c'est-à-dire les mots comprenant chacun les champs C1, C2, C3 et C4, ont ensuite été décalés d'une adresse en direction de la fin de l'espace de stockage réservé. Ainsi, dans cet exemple, le mot 900 est décalé à l'adresse X+2, et le mot 901 est décalé à l'adresse X+1.

Un mot 902 comprenant les quatre champs C1, C2, C3 et C4 a alors été enregistré à l'adresse de début de l'espace de stockage réservé, ici l'adresse X. Le champ C1 du mot 902 est à une valeur indiquant que le type de modification de la mémoire concerne l'ajout d'un code logiciel d'un nouveau service. Le champ C2 du mot 902 est à une valeur indiquant l'index de service pointant vers le code Code2. Le champ C3 du mot 902 est à une valeur indiquant la taille du code Code2. Le champ C4 du mot 902 est à une valeur indiquant l'adresse de début de la plage d'adresses du code Code2, dans cet exemple l'adresse @Code2.

Plus généralement, chaque ajout d'un code logiciel dans l'espace de stockage réservé comprend :
- décaler, d'une adresse vers la fin de l'espace de stockage réservé, les mots mémoires représentatifs des codes logiciels enregistrés dans l'espace de stockage réservé, et le mot mémoire initial 900 représentatif de l'adresse, en partant de la fin de l'espace de stockage réservé, du premier mot mémoire libre, ou, autrement dit, décaler les mots comprenant les champs C1 à C4 ;
- enregistrer, dans une plage d'adresses successives dont la dernière correspond à l'adresse indiquée par le champ C4 du mot initial 900, le code logiciel à ajouter ;
- enregistrer, à l'adresse de début de l'espace de stockage réservé, un mot mémoire représentatif du nouveau code logiciel, ou, autrement dit, un mot mémoire comprenant les champs C1 à C4 ; et
- mettre à jour le mot mémoire initial 900 pour que l'adresse indiquée par son champ C4 corresponde à l'adresse, en partant de la fin de l'espace de stockage réservé, du premier mot mémoire libre.

Par ailleurs, bien que cela ne soit pas illustré, de préférence, le procédé décrit en relation avec la figure 9, comprend en outre, lorsqu'un code logiciel est supprimé de l'espace de stockage réservé, les étapes suivantes :
- supprimer ce code logiciel ;
- décaler vers la fin de l'espace de stockage réservé, d'un nombre d'adresses correspondant à la taille du code logiciel supprimé, les éventuels codes logiciels enregistrés avant le code logiciel supprimé dans l'espace de stockage réservé, c'est-à-dire du côté du début de l'espace de stockage réservé par rapport au code logiciel supprimé ;
- supprimer le mot mémoire représentatif du code logiciel supprimé ;
- mettre à jour les mots mémoires représentatifs des codes logiciels enregistrés dans l'espace de stockage réservé, et en particulier leurs champs C4 ; et
- décaler, d'une adresse vers le début de l'espace mémoire réservé, les mots mémoires représentatifs des codes logiciels enregistrés dans l'espace de stockage réservé.

Le procédé décrit ci-dessus permet de conserver un espace de stockage, continu et libre, pour y enregistrer des nouveaux codes logiciels, qui soit aussi grand que possible compte tenu de la taille de l'espace de stockage réservé et des codes logiciels qui y sont déjà enregistrés.

Dans la description faite ci-dessus, on a considéré que les adresses X et X+Y sont les adresses respectivement de début et de fin de l'espace de stockage réservé. Toutefois, cela n'est qu'une convention et l'homme du métier est en mesure d'adapter le procédé décrit ci-dessus au cas où l'on considère que, par convention, les adresses X et X+Y sont les adresses respectivement de fin et de début de cet espace de stockage réservé.

Bien que cela ne soit pas détaillé ici, l'homme du métier est en mesure d'adapter le procédé décrit en relation avec la figure 9 au cas où le paramètre 3022 (figures 3 et 6) ne peut prendre que certaines des valeurs IR, RS, RP, IP et IS.

Divers modes de réalisation et variantes ont été décrits. L'homme de l'art comprendra que certaines caractéristiques de ces divers modes de réalisation et variantes pourraient être combinées, et d'autres variantes apparaîtront à l'homme de l'art. En particulier, on a décrit ci-dessus le cas d'une mémoire 33 de type ROM, c'est-à-dire une mémoire morte dont le contenu est figé lors de la fabrication de la mémoire. Dans des variantes de réalisation, la mémoire 33 correspond à une mémoire, par exemple de type flash, dont le contenu est figé non pas lors de sa fabrication mais en interdisant de manière définitive tout accès en écriture à la mémoire 33 une fois que celle-ci a été programmée, par exemple en détruisant un fusible de configuration de cette mémoire 33.

On a décrit ci-dessus des modes de réalisation et variantes de modification d'un jeu de services exposés par un microprocesseur 3 en modifiant une mémoire 32 du microprocesseur 3, dans lesquels le jeu de services exposés initialement par le microprocesseur 3, lors de sa mise sous tension, est déterminé par le contenu figé d'une autre mémoire 33 du microprocesseur, et le contenu initial de la mémoire 32 est également déterminé par le contenu figé de la mémoire 33. Ces modes de réalisation et variantes ne se limitent pas au cas où le microprocesseur 3 est un microprocesseur sécurisé (boîte noire transactionnelle).

Enfin, la mise en oeuvre pratique des modes de réalisation et variantes décrits est à la portée de l'homme du métier à partir des indications fonctionnelles données ci-dessus. En particulier, pour ce qui est la programmation des données 300 dans le microprocesseur 2 par une personne habilitée, l'homme du métier est en mesure de générer les données 300, de les enregistrer dans une mémoire non volatile du microprocesseur 2, et de programmer le microprocesseur 2 pour que ce dernier enregistre les données 300 à un emplacement mémoire donné et génère une requête de modification du contenu de la mémoire 32 du microprocesseur 3, la requête indiquant notamment à quel emplacement mémoire les données 300 sont accessibles par le microprocesseur 3.

## Revendications

1. Procédé comprenant des étapes consistant à :
a) recevoir, par un premier microprocesseur (3), une requête de modification d'un contenu d'une première mémoire (32) du premier microprocesseur, accessible par le premier microprocesseur uniquement ;
b) accéder (401), avec le premier microprocesseur, à des premières données (302) associées à la requête et à une signature (304) générée à partir des premières données (302) et d'un algorithme de chiffrement asymétrique, les premières données et la signature étant disponibles dans une deuxième mémoire (22) d'un deuxième microprocesseur (2), et les premières données (302) étant représentatives d'une modification à appliquer au contenu de la première mémoire (32), ladite modification étant représentative d'une modification d'un jeu de services exposés par le premier microprocesseur ;
c) vérifier (402), par le premier microprocesseur (3), l'authenticité des premières données (302) à partir de ladite signature (304) ; et
d) modifier le contenu de la première mémoire (32) conformément aux premières données (302), la mise en oeuvre de l'étape d) étant conditionnée par l'étape c).

2. Procédé selon la revendication 1, dans lequel :
- une première table d'indirection est stockée dans la première mémoire (2), la première table comprenant un ou plusieurs premiers index dont chacun pointe vers un service exposé différent ou vers un service non supporté ;
- les premières données (302) comprennent des deuxièmes données (302-2) représentatives au moins d'un index cible (3020) et d'un paramètre (3022) dont une valeur est sélectionnée parmi au moins une première valeur (RS) et une deuxième valeur (IR) ; et l'étape d) comprend :
- lorsque ledit paramètre (3022) est à la première valeur (RS), une étape de modification de la première table pour faire pointer le premier index égal à l'index cible (3020) vers un service non supporté ; ou
- lorsque ledit paramètre (3022) est à la deuxième valeur (IR), une étape de modification de la première table pour faire pointer le premier index égal à l'index cible (3020) vers un autre service encore non exposé.

3. Procédé selon la revendication 2, dans lequel la valeur du paramètre (3022) est sélectionnée parmi au moins la première valeur (RS), la deuxième valeur (IR) et une troisième valeur (IS), l'étape d) comprenant, lorsque le paramètre (3022) est à la troisième valeur (IS), une étape consistant à enregistrer un code logiciel d'un nouveau service dans la première mémoire (32), et une étape de modification de la première table pour faire pointer le premier index égal à l'index cible (3020) vers le nouveau service.

4. Procédé selon la revendication 2 ou 3, dans lequel :
- une deuxième table d'indirection est stockée dans la première mémoire (32), la deuxième table comprenant un ou plusieurs deuxièmes index dont chacun pointe vers une zone de la première mémoire (32) contenant ou non une mise à jour d'un des services exposés ; et
- la valeur du paramètre (3022) est sélectionnée parmi au moins la première valeur (RS), la deuxième valeur (IR) et une quatrième valeur (RP), l'étape d) comprenant, lorsque le paramètre (3022) est à la quatrième valeur (RP), une étape consistant à supprimer la mise à jour contenue par la zone de la première mémoire (32) pointée par le deuxième index égal à l'index cible (3020).

5. Procédé selon la revendication 4, dans lequel la valeur du paramètre est sélectionnée parmi au moins la première valeur (RS), la deuxième valeur (IR), la quatrième valeur (RP) et une cinquième valeur (IP), l'étape d) comprenant, lorsque le paramètre (3022) est à la cinquième valeur (IP), une étape consistant à enregistrer, dans la zone de la première mémoire (32) pointée par le deuxième index égal à l'index cible (3020), un code logiciel d'une mise à jour d'un des services exposés.

6. Procédé selon la revendication 3, la revendication 4 prise dans sa dépendance à la revendication 3, ou la revendication 5, dans lequel les premières données (302) comprennent des troisièmes données (302-3) représentatives du code logiciel enregistré, à l'étape d), dans la première mémoire (32).

7. Procédé selon l'une quelconque des revendications 2 à 6, dans lequel les deuxièmes données (302-2) sont des données chiffrées par un algorithme de chiffrement symétrique, l'étape d) comprenant une étape d1) de déchiffrement (500) des deuxièmes données (302-2) par le premier microprocesseur (3).

8. Procédé selon la revendication 7 prise dans sa dépendance à la revendication 6, dans lequel les troisièmes données (302-3) sont des données chiffrées par un autre algorithme de chiffrement symétrique, l'étape d) comprenant, après l'étape d1), une étape d2) de déchiffrement (700, 802) des troisièmes données (302-3) par le premier microprocesseur.

9. Procédé selon la revendication 8, dans lequel les deuxièmes données (302-2) sont en outre représentatives d'un premier code d'intégrité (3032) généré lors du chiffrement des troisièmes données (302-3), l'étape d2) comprenant en outre la comparaison (701, 804) du premier code d'intégrité (3032) à un deuxième code d'intégrité généré lors du déchiffrement (700, 802) des troisièmes données (302-3), la modification du contenu de la première mémoire (32) conformément aux premières données (302) étant conditionnée par ladite comparaison.

10. Procédé selon l'une quelconque des revendications 1 à 9, dans lequel le jeu de services exposés initialement par le premier microprocesseur (3) est déterminé par le contenu d'une troisième mémoire non volatile (33) du premier microprocesseur, de préférence une mémoire ROM, le contenu de la troisième mémoire étant figé et accessible par le premier microprocesseur uniquement.

11. Procédé selon la revendication 10 prise dans sa dépendance à la revendication 2, dans lequel ledit service encore non exposé est déterminé par le contenu de la troisième mémoire (33) .

12. Procédé selon l'une quelconque des revendications 1 à 11, dans lequel les données de mise à jour comprennent en outre des quatrièmes données (302-1) non chiffrées indiquant :
- l'algorithme de chiffrement asymétrique utilisé (3027) ; et/ou
- un vecteur d'initialisation (3030) du chiffrement symétrique ; et/ou
- une taille (3028) des premières données (302) ; et/ou
- une version (3029) de la troisième mémoire (33) et de son contenu.

13. Procédé selon l'une quelconque des revendications 1 à 12, dans lequel la première mémoire (32) est une mémoire volatile, de préférence une mémoire RAM.

14. Microprocesseur (3) comprenant un processeur (31) et une mémoire non volatile (33) dont le contenu est figé, la mémoire non volatile (33) comprenant des instructions qui, lorsqu'elles sont lues par le processeur (31), entraînent la mise en oeuvre du procédé selon l'une quelconque des revendications 1 à 13.
